(19) Europäisches Patentamt
European Patent Office
Office européen des brevets

(11) Veröffentlichungsnummer: **0 017 009**
**B1**

(12) # EUROPÄISCHE PATENTSCHRIFT

(45) Veröffentlichungstag der Patentschrift: **28.12.83**

(21) Anmeldenummer: **80101198.2**

(22) Anmeldetag: **10.03.80**

(51) Int. Cl.³: **D 06 P 1/14,** D 06 P 1/12, C 09 B 67/22, C 09 B 47/073, C 09 B 57/00, C 09 B 59/00

(54) **Farbstoffe und Färbungen auf Basis von gegebenenfalls substituierten 2-Amino-5-iminopyrroleninen.**

(30) Priorität: **22.03.79 DE 2911170**

(43) Veröffentlichungstag der Anmeldung:
**15.10.80 Patentblatt 80/21**

(45) Bekanntmachung des Hinweises auf die Patenterteilung:
**28.12.83 Patentblatt 83/52**

(84) Benannte Vertragsstaaten:
**CH DE FR GB**

(56) Entgegenhaltungen:
**DE - A - 1 469 725**
**DE - B - 1 050 302**
**DE - B - 1 051 242**
**FR - A - 1 192 444**
**US - A - 2 765 308**

(73) Patentinhaber: **BAYER AG**
**Zentralbereich Patente, Marken und Lizenzen**
**D-5090 Leverkusen 1, Bayerwerk (DE)**

(72) Erfinder: **Eibl, Johannes, Dr.**
**Am Jungholzkamp 31**
**D-5093 Burscheid (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 017 009 B1

Farbstoffe und Färbungen auf Basis von gegebenenfalls substituierten 2-Amino-5-iminopyrroleninen

Die Erfindung betrifft neue Farbstoffe auf der Basis von gegebenenfalls substituierten 2-Amino-5-imino-pyrroleninen sowie ein Verfahren zur Erzeugung von Färbungen mit diesen Farbstoffen auf Fasermaterialien.

Die neuen Farbstoffe bzw. Färbungen sind dadurch erhältlich, daß man ein Gemisch aus

A) einer Verbindung, die in einer ihrer tautomeren Strukturen der Formel

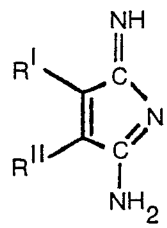

(I)

entspricht, in der

R', R''=Alkyl, Phenyl, Wasserstoff oder zusammen Reste der Formeln

$S-CH_2-CH_2-S$,

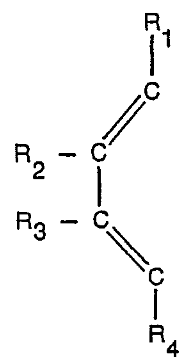

oder $CH_2—CH_2—CH_2—CH_2$, wobei

$R_1$, $R_2$, $R_3$, $R_4$ Phenyl, Alkoxy, Halogen, Phenoxy, Alkyl und Wasserstoff bezeichnen;

B) mindestens einer Verbindung, die einer der folgenden Stoffklassen a) und/oder b) angehört:

a) eine Verbindung der Formel

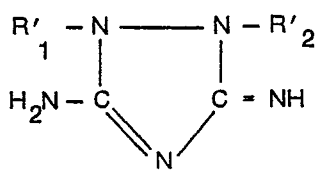

(III)

in der

$R'_1$, $R'_2$, für Wasserstoff, Acyl-, Alkyl- oder Arylreste stehen,

b) eine Verbindung der Formel

$$[Ar]—(NH_2)_n \qquad (IV)$$

wobei

Ar für einen gegebenenfalls substituierten Phenyl-, Biphenylyl-, Naphthyl-, Binaphthylyl- oder Anthrachinonyl-Rest steht und

n 2, 3 oder bezeichnet, und

c) gegebenenfalls zusätzlich einem Hydroxynaphthoesäure-(2)-arylamid der Formel

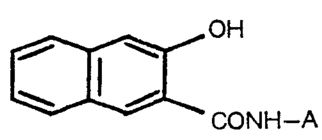

wobei A für einen gegebenenfalls durch $C_1—C_4$-Alkyl, $C_1—C_4$-Alkoxy, Nitro, Halogen substituierten Phenyl- oder Naphthylrest steht;

C) einer Diazoaminoverbindung; gegebenenfalls in Gegenwart eines Metalls oder einer Metallverbindung, die für die Herstellung von metallhaltigen Phthalocyaninen verwendet werden können, gegebenenfalls in Gegenwert eines Verdünnungsmittels unter Wärmebehandlung gegebenenfalls auf Fasermaterialien umsetzt.

Bevorzugt werden die neuen Farbstoffe dadurch hergestellt, daß man, bezogen auf das Gesamtgewicht der Komponenten A, B und C 40—70 Gew.-% der Komponente A, 10—20 Gew.-% der Komponente B und 15—30 Gew.-% der Komponente C einsetzt.

Zur Herstellung der neuen Farbstoffe eignen sich als Ausgangsprodukte insbesondere solche Verbindungen der Formel (I), bei denen

$R^I$, $R^{II}$ = $C_1$—$C_4$-Alkyl, Phenyl, Wasserstoff oder zusammen Reste der Formeln

$$S—CH_2—CH_2—S, \quad CH_2—CH_2—CH_2—CH_2 \text{ oder}$$

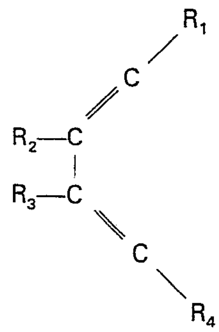

wobei

$R_1$, $R_2$, $R_3$, $R_4$ Wasserstoff oder Halogenatome, insbesondere Chlor und Brom sowie einer oder zwei der Reste $R_1$, $R_2$, $R_3$, $R_4$, Alkyl-, insbesondere $C_1$—$C_4$-Alkyl, Alkoxy-, bevorzugt Methoxy- oder Phenoxygruppen und die übrigen Wasserstoffatome bezeichnen, sind.

Aus der DE—A 1 050 302 ist ein Verfahren zum Bedrucken oder Färben von Textilien bekannt, wobei Aminoverbindungen der Formel

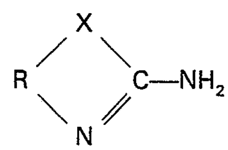

in der X für ein Sauerstoffatom, Schwefelatom oder eine —NH-Gruppe steht und in der R einen gegebenenfalls noch weiter substituierten Phenylen- oder Naphthylenrest bedeutet, in Gegenwart von 5-Iminopyrroleninen, die in 2-Stellung eine austauschfähige Gruppe enthalten und die in 3- und 4-Stellung durch weitere Reste substituiert sind, auf die zu färbenden Materialien aufbringt und anschließend die Farbstoffe durch Erhitzen auf höhere Temperaturen entwickelt.

Aus der DE—A 1 469 725 ist ein Verfahren zum Färben und Bedrucken von Fasermaterialien bekannt, wobei man als Farbstoff ein Gemisch verwendet, das besteht einerseits aus einem Gemisch A, welches besteht aus

1) einem für die Herstellung von metallhaltigen Phthalocyaninen oder phthalocyaninähnlichen, metallhaltigen Farbstoffen auf der Faser geeigneten 3-Imino-isoindolenin und

2) der für die Bildung des metallhaltigen Farbstoffs erforderlichen Metallverbindung

und andererseits aus einem Gemisch B, welches besteht aus annähernd äquivalenten Teilen

1) einer neutralspaltbaren, stabilisierten Diazoverbindung, die im Rest der Diazokomponente in o-Stellung zur Diazoniumgruppe einen niederen Alkoxyrest enthält und

2) einer Eisfarben-Kupplungskomponente.

Bei dem Verfahren gemäß DE—A 1 469 725 entsteht ein Gemisch von Reaktionsprodukten aus Gemisch A (3-Imino-isoindolenin und Metallverbindung) und Gemisch B (stabilisierte Diazoverbindung und Eisfarben-Kupplungskomponente) auf der Faser nebeneinander. Siehe dazu DE—A 1 469 725, Seite 2, Zeile 1—10.

Im Gegensatz dazu tritt im Falle der vorliegenden Anmeldung eine chemische Reaktion zwischen allen beteiligten Komponenten ein, was zu neuen in der Phthalogenchemie bisher noch nicht zugänglichen Farbtönen und naturgemäß homogeneren Färbungen führt. Es war höchst überraschend, daß ein derartiges komplexes System wie der Druckansatz zum Erhalt der erfindungsgemäßen Farbstoffe bzw. Färbungen zu einheitlichen und färberisch extrem wertvollen Ausfärbungen führt.

Dies gilt sowohl für die metallfreien als auch die metallhaltigen Farbstoffe.

Als Beispiele für erfindungsgemäß einsetzbare Verbindungen der Formel (I) seien genannt: 3,4-Dimethyl-2-amino-5-imino-pyrrolenin, 3-Ethyl-4-methyl-2-amino-5-imino-pyrrolenin, 1-Amino-3-

imino-isoindolenin, 5-Phenyl-1-amino-3-imino-isoindolenin, 4,7-Dithia-4,5,6,7-tetrahydro-1-amino-3-imino-isoindolenin, 4,5,6,7-Tetrahydro-1-amino-3-imino-isoindolenin.

Besonders bevorzugt eingesetzt wird 1-Amino-3-imino-isoindolenin der tautomeren Strukturen

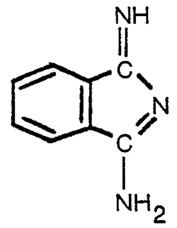

und

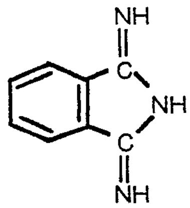

In Formel (III) stehen $R_1'$ und $R_2'$ bevorzugt für Wasserstoff, $C_1$—$C_4$-Alkyl, $C_1$—$C_4$-Alkylcarbonyl oder für gegebenenfalls durch $C_1$—$C_4$-Alkyl, Halogen, vorzugsweise Chlor, Brom und Fluor, Nitro, Carboxy, Cyan, Sulfamoyl, Carbamoyl, $C_1$—$C_4$-Alkylsulfonyl, Phenylsulfonyl, Amino, $C_1$—$C_4$-Alkylamino, Di-($C_1$—$C_4$-alkyl)-amino substituiertes Phenyl.

Als Beispiele für erfindungsgemäß einsetzbare Verbindungen, die in eine ihrer tautomeren Strukturen der Formel (III) entsprechen, seien gennant: 2,5-Diamino-3-phenyl-1,3,4-triazol, 2,5-Diimino-1,3,4-triazol, 2-Amino-5-imino-3,4-dimethyl-1,3,4-triazol, 2,5-Diamino-3-(2-chlorphenyl)-1,3,4-triazol, 2,5-Diamino-3-(2-nitrophenyl)-1,3,4-triazol, 2,5-Diamino-3-(4-carboxyphenyl)-1,3,4-triazol, 2,5-Diamino-3-(4-sulfonamidophenyl)-1,3,4-triazol, 2,5-Diamino-3-benzolsulfon-1,3,4-triazol (Phenylguanazol).

Besonders bevorzugt Verwendet findet 2,5-Diamino-3-phenyl-1,3,4-triazol.

Bezüglich Formel IV gilt:

Die für Ar genannten Reste können vorzugsweise folgende Substituenten trage: $C_1$—$C_6$-Alkyl, insbesondere Methyl und Ethyl, $C_1$—$C_6$-Alkoxy, insbesondere Methoxy und Ethoxy, Halogen, insbesondere Chlor, Brom und Fluor, Hydroxy, Sulfo, Carboxy und Nitro.

Als Beispiele für Polyamine der Formel (IV) seien genannt: o-Phenylendiamin, m-Phenylendiamin, p-Phenylendiamin, 2,4-, 2,3-, 2,5-, 3,4- und 3,5-Diaminobenzoesäure, 2,4,6-Triaminobenzoesäure, 2,3-, 3,4-, 2,4- und 2,5-Diaminomethylbenzol, 2,4- und 2,5-Diaminoanisol, 2,5- und 3,4-Diaminonitrobenzol, 2,4-Diaminophenol, 4,5-Diamino-o-xylol, 3,6-Diaminodurol, 2,4,6-Triaminotoluol, 1,3,5-Triamino-2,4,6-trimethylbenzol, 1,2,4,5-Triaminobenzol, 1,2,3- 1,2,4- und 1,3,5-Triaminobenzol, o-Tolidin, o-Dianisidin, 2,2'-Diaminodiphenyl, 4,4'-Diaminodiphenyldisulfonsäure-(3,3'), 1,5-, 1,8- und 2,3-Diaminonaphthalin, 1,1'-Diamino-2,2'-dinaphthyl, 2,2'-Diamino-1,1'-dinaphthyl, 4,4'-Diamino-1,1'-dinaphthyl, 1,2-, 1,4-, 1,5-, 1,6-, 1,7-, 1,8-, 2,3-, 2,6- und 2,7-Diaminoanthrachinon, 1,4-Diamino-2,3-dichloranthrachinon, 1,4-Diamino-5,8-dichloranthrachinon, 1,5-Diamino-4,8-dihydroxyanthrachinon, 1,4-Diamino-2-methylanthrachinon, 1,4,5,8-Tetraaminoanthrachinon.

In dem gegebenenfalls zusätzlich vorhandenen Hydroxynaphtholsäure-(2)-arylamid der Formel

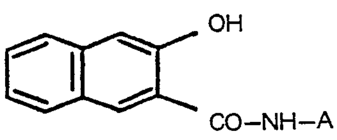

steht A vorzugsweise für einen gegebenenfalls durch Methyl, Methoxy, Ethoxy, Nitro, Chlor, Brom und Fluor substituierten Phenyl- oder Naphthylrest.

Bevorzugt werden solche Diazoaminoverbindungen C) beim erfindungsgemäßen Verfahren eingesetzt, die sich mit ®Naphtol-AS-Komponenten zu Rapidogenen kombinieren lassen [H. Zollinger; Chemie der Azofarbstoffe, Birkhäuser-Verlag, 1958, S. 98—110]. Als Stabilisatoren für die Diazoniumverbindungen seien beispielhaft genannt: Carbonsäuren und Sulfonsäure primärer Amine, Carbonsäuren und Sulfonsäuren sekundärer aliphatisch-aromatischer Amine, analoge Derivate sekundärer aliphatischer Amine, sekundäre aliphatisch-heterocyclische Amine, z.B. Pyridylaminoessigsäure, und heterocyclische sekundäre Amine, Piperidinsulfonsäure und -carbonsäuren Hydrolyseprodukte von Eiweißstoffen, Cyanamid, Derivate des Dicyanidiamids und Guanidins.

Bevorzugte Stabilisatoren sind:

Sarkosin, Methyltaurin, S-Sulfoanthranilsäure, H-Sulfoanthranilsäure und ihre N-Alkylderivate wie z.B.

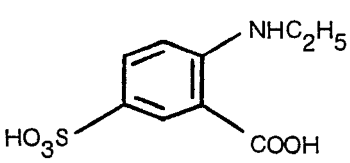

Vorzugsweise werden zur Herstellung der neuen Farbstoffe folgende stabilisierte Diazoaminoverbindungen eingesetzt:

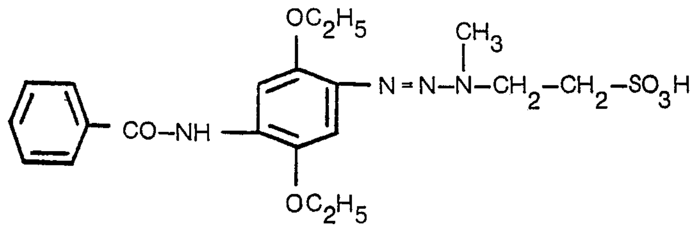

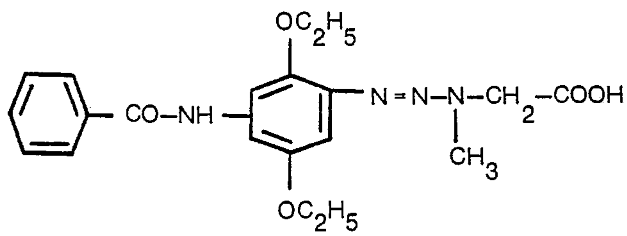

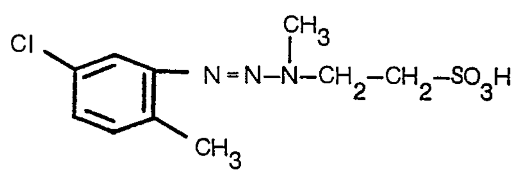

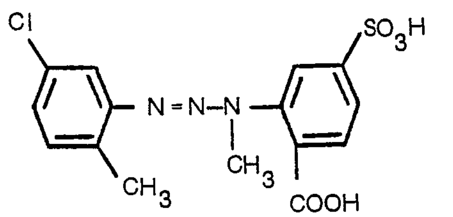

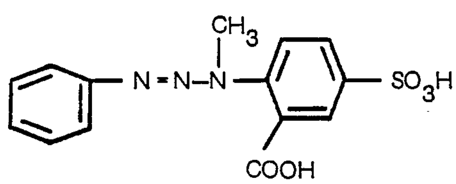

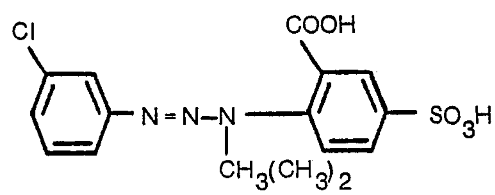

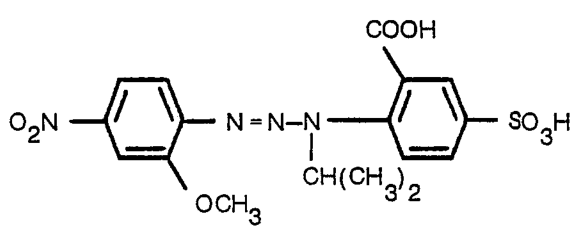

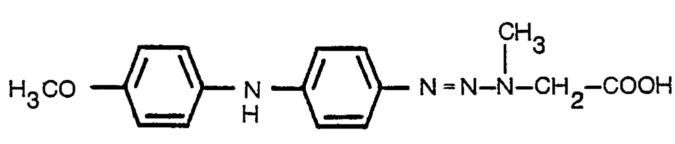

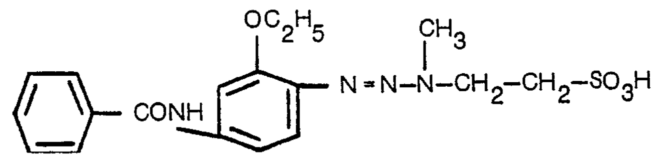

Zur Herstellung der Farbstoffe bzw. Färbungen geeignete Metallverbindungen sind alle, die z.B. auch bei der Herstellung von metallhaltigen Phthalocyaninen verwendet werden. Genannt seien z.B. Salze oder Komplexverbindungen von Cu, Co, Ni, Mg und Na. Bevorzugte Verwendung finden Cu-, Co- und Ni-Verbindungen.

Das erfindungsgemäße Verfahren zur Erzeugung von Färbungen auf Fasermaterialien ist dadurch gekennzeichnet, daß man die im Vorhergehenden beschriebenen neuen Farbstoffe auf der Faser in Gegenwart von Lösungsmitteln und gegebenenfalls Reduktionsmitteln herstellt.

Als Lösungsmittel eignen sich für das erfindungsgemäße Verfahren vorzugsweise solche, die schwach reduzierende Eigenschaften besitzen, wie z.B. mehrwertige Alkohole, genannt seien Glykol und Glycerin, oder reduzierende Säuren bzw. ihre funktionellen Derivate, wie. z.B. Ameisensäure und Formamid, oder auch Aminohydroxylverbindungen, wie die Aminoalkohole. Weitere geeignete Lösungsmittel bzw. Lösungsmittelgemische werden z.B. in der DE—PS 888 837 beschrieben. Geeignet sind aber auch Chlorbenzol, Nitrobenzol und Toluol.

Die Erzeugung der Färbungen auf der Faser aus den erfindungsgemäß verwendeten Verbindungen kann in so schonender Weise erfolgen, daß keine Schädigung der Faser eintritt. Mitunter ist es vorteilhaft, Salze (besonders Ammoniumsalze) von anorganischen oder organischen Säuren oder auch die Säuren selbst dem Reaktionsgemisch zuzuführen. Nachdem man gegebenenfalls die zur Komplexbildung fähigen Metalle bzw. Metallverbindungen zugesetzt hat, bringt man die Ausgangsmaterialien auf die Faser nach an sich bekannten Verfahren auf, z.B. durch Klotzen oder Drucken, und entwickelt dann die Farbstoffe durch neutrales oder saures Dämpfen oder allein durch eine Wärmebehandlung, wobei man z.B. in der in der DE—PS 888 837 angegebenen Weise verfahren kann.

Nach dem neuen Verfahren werden Farbstoffe bzw. Färbungen oder Drucke in den verschiedensten Farbtönen, wie z.B. Grün, Grau, Oliv, Braun, Ziegelrot, erhalten, die vorzugliche Echtheitseigenschaften besitzen.

Das neue Verfahren eignet sich besonders zum Färben und Bedrucken von Cellulose oder cellulosehaltigem Material.

Die Kondensation der Komponenten A, B und C zur Herstellung von Farbstoffen insbesondere Pigmenten in Substanz erfolgt zweckmäßig durch Umsetzen in Wasser oder in einem vorzugsweise hydrophilen, organischen Lösungsmittel, beispielsweise aliphatischen Alkoholen mit 1 bis 4 C-Atomen, wie Methanol, Ethanol, Isopropanol, Butanol, ferner Glykolen oder Glykolether, offenkettigen oder cyclischen Amiden, wie Dimethylformamid, Dimethylacetamid oder N-Methylpyrrolidon, wobei auch Mischungen der genannten Lösungsmittel verwendet werden können. Die Umsetzung erfolgt zweckmäßig bei Temperaturen zwischen 20 und 150°C.

Die erhaltenen Pigmente fallen zumeist schon in der Hitze aus und können durch Abfiltieren und gegebenenfalls durch Waschen mit organischen Lösungsmitteln in reiner Form isoliert werden.

Eine andere Darstellungsmöglichkeit für die neuen Pigmente besteht darin, die Ausgangskomponenten in der Harnstoffschmelze bei etwa 130 bis etwa 150°C umzusetzen und den Ansatz in an sich bekannter Weise aufzuarbeiten.

Die erhaltenen Pigmente besitzen im allgemeinen eine gute Textur und können meistens als Rohprodukte verwendet werden. Falls nötig oder erwünscht, kann man die Rohprodukte durch Mahlen oder Kneten in eine feindisperse Form überführen. Dabei werden zweckmäßig Mahlhilfsmittel, wie anorganische und/oder organische Salze in Gegenwart oder Abwesenheit organischer Lösungsmittel verwendet. Auch durch Behandeln der Rohpigmente mit organischen Lösungsmitteln kann oft eine Verbesserung der Eigenschaften erreicht werden. Nach dem Mahlen werden Hilfsmittel wie üblich entfernt, lösliche anorganische Salze, z.B. mit Wasser und wasserunlösliche Hilfsmittel beispielsweise durch Wasserdampfdestillation.

Die erfindungsgemäß erhaltenen Pigmente eignen sich zum Färben von hochmolekularem organischem Material natürlicher oder künstlicher Herkunft. Es kann sich z.B. um Naturharze, trocknende Öle oder Kautschuk handeln. Es kann sich aber auch un abgewandelte Naturstoffe handeln, beispielsweise um Chlorkautschuk, um ölmodifizierte Alkylharze oder um Cellulosederivate, wie Viskose, Acetylcellulose und Nitrocellulose, und besonders um vollsynthetische organische Polyplaste, d.h. um Kunststoffe, die durch Polymerisation, Polykondensation hergestellt sind. Aus der Klasse dieser Kunststoffe seien besonders folgende genannt: Polyethylen, Polypropylen, Polyisobutylen, Polystyrol, Polyvinylchlorid, Polyvinylacetat, Polyacrylnitril, Polyacrylsäure- und Polymethacrylsaüreester; Polyester, insbesondere hochmolekulare Ester aromatischer Polycarbonsäuren mit polyfunktionellen Alkoholen; Polyamid; die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste; die als Lackharze verwendeten Polyester, und zwar sowohl

gesättigte wie z.B. Alkydharze, als auch ungesättigte, wie beispielsweise Maleinatharze, und ferner die unter dem Namen "Epoxidharze" bekannten Polyadditions- bzw. Polykondensationsprodukte von Epichlorhydrin mit Diolen oder Polyphenolen; ferner die sogenannten Thermoplasten, d.h. die nicht härtbaren Polyplaste. Es sei betont, daß nicht nur die einheitlichen Verbindungen, sondern auch Gemisch von Polyplasten, sowie Mischkondensate und Mischpolymerisate, wie z.B. solche auf Basis von Butadien, erfindungsgemäß pigmentiert werden können.

Beispiel 1

Druckansatz

10 g Anilid der 3-Hydroxynaphthoesäure-(2) (®Naphtol—AS)

30 g 1-Amino-3-imino-isoindolenin

10 g Phenylguanazol

15 g Sarkosin-Nickelsalz

100 g Thiodiglykol

312 g Wasser

8 g 32,5 %ige Natronlauge (38° Bé)

450 g Stärkeether-Alginat-Verdickung

30 g 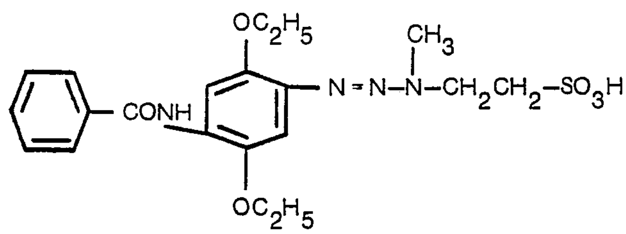

35 g Diethylaminoethanol-lactat

Mit diesem Ansatz wird in bekannter Weise ein Baumwollgewebe bedruckt und der Druck wie üblich durch Dämpfen und Nachbehandlung fertiggestellt.

Es resultiert ein schwarzer Druck mit hervorragenden Echtheitseigenschaften.

1.1 Die Mengen der Ausgangskomponenten im obigen Druckansatz lassen sich im Bereich

10—15 g Anilid der 3-Hydroxynaphthoesäure-(2)

30—40 g 1-Amino-3-imino-isoindolenin

10—15 g Phenylguanazol

15—20 g Sarkosin-Nickelsalz

variieren.

Die zugesetzte Wassermenge ist dann jeweils so zu bemessen, daß für den Druckansatz eine Masse von 1000 g resultiert.

Beispiel 2

Druckansatzt

40 g 1-Amino-3-imino-isoindolenin

13 g m-Phenylendiamin

12 g Sarkosin-Nickelsalz

12 g 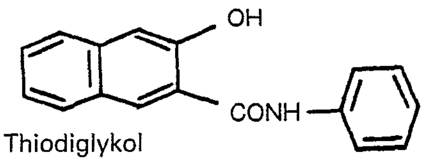

100 g Thiodiglykol

X g Wasser*

8 g 32,5 %ige Natronlauge

5 g konz. Ammoniaklösung

25 g 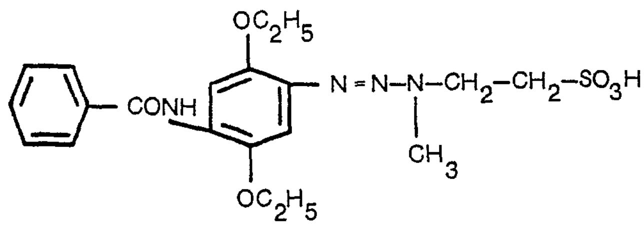

500—550 g Stärkeetherlösung

35 g Säureabspalter

*Die Wassermenge ist so zu bemessen, daß für den Druckansatz eine Gesamtmasse von 1000 g resultiert

Obiger Druckansatz wird auf ein Baumwoll- oder Regeneratcellulosegewebe aufgedruckt, getrocknet und durch neutrales Dämpfen bei 102°C während 6—7 min. fixiert. Die Drucke werden einer intensiven alkalischen Kochwäsche unterworfen und nach dem Spülen getrocknet.

Es resultiert ein neutralbrauner Druck.

2.1 Ersetzt man im vorstehend aufgeführten Druckansatz m-Phenylendiamin durch 1,4-Diaminoanthrachinon, so erhält man einen dunklen graublauen Druck auf Baumwolle.

Beispiel 3

Druckansatz

40 g 1-Amino-3-imino-isoindolenin

13 g Variante I

12 g Sarkosin-Nickelsalz

12 g Variante II

100 g Thiodiglykol

X g Wasser*

8 g 32,5 %ige Natronlauge

5 g konz. Ammoniaklösung

25 g 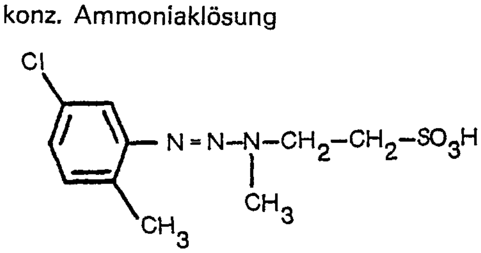

500—550 g Stärkeetherlösung

35 g Diethylaminoethanol-lactat

*Die Wassermenge ist so zu bemessen, daß für den Druckansatz eine Gesamtmasse von 1000 g resultiert

Dieser Druckansatz wird auf ein Baumwoll- oder Regeneratcellulosegewebe aufgedruckt oder mit ca. 250 g Stärkeetherverdickung aufgeklotzt und durch neutrales Dämpfen bei 102°C während 6—7 min. fixiert. Die Drucke werden einer intensiven alkalischen Kochwäsche unterworfen und nach dem Spülen getrocknet. Die nachfolgende Übersicht zeigt die Farbtöne der Drucke bei Einsatz von

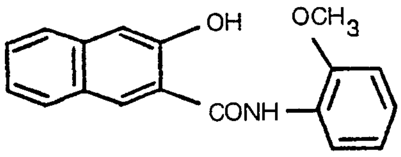 oder 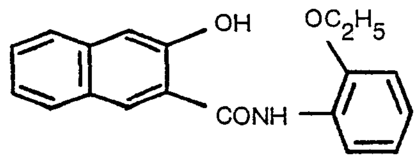 als Variante II,

und den im folgenden angegebenen Verbindungen als Variante I.

| | Farbton des Druckes auf Baumwolle |
|---|---|
| m-Phenylendiamin | sehr dunkles Braun |
| 1,4-Diaminoanthrachinon | sehr dunkles Stahlblau |

Beispiel 4

Druckansatz

| A | B | |
|---|---|---|
| 40 g | 40 g | 1-Amino-3-imino-isoindolenin |
| 13 g | 13 g | m-Phenylendiamin |
| 12 g | 12 g | Nickelkomplex des Sarkosin |

Forts. Beispiel 4

Druckansatz

| A | B | |
|---|---|---|
| 12 g | — | 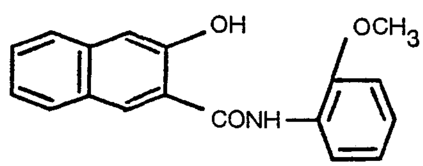 |
| 30 g | 30 g | 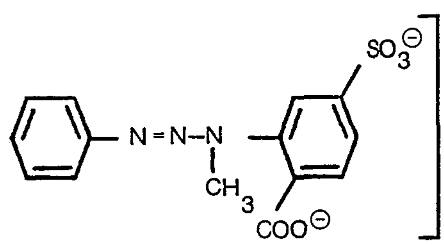 2 Na$^{\oplus}$ |
| 100 g | 100 g | Thiodiglykol |
| 8 g | 8 g | 32,5 %ige Natronlauge |
| X g | | Wasser* |
| 5 g | 5 g | 23 %ige Ammoniaklösung |
| ca. 500 g | ca. 500 g | Stärkeether-Alginat-Verdickung |
| 35 g | 35 g | Diethylaminoethanollactat |

* Die zugesetzt Wassermenge ist so zu bemessen, daß für den Druckansatz eine Gesamtmasse von 1000 g resultiert.

Diese Ansätze geben nach dem Drucken auf Baumwolle, Trocknen und Fixieren durch Neutraldampf (6—8 min. bei 100—102°C) farbstarke Braunfarbstoffe, die im Farbton etwas voneinander abweichen.

Beispiel 5

Ersetzt man in den Druckansätzen A und B des Beispiels 4

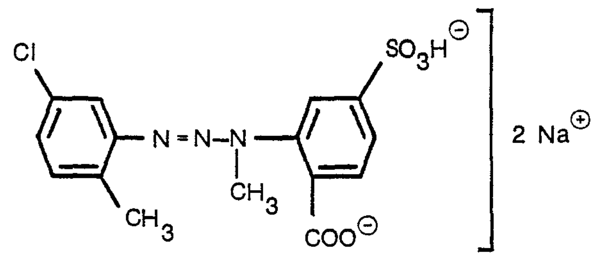

durch

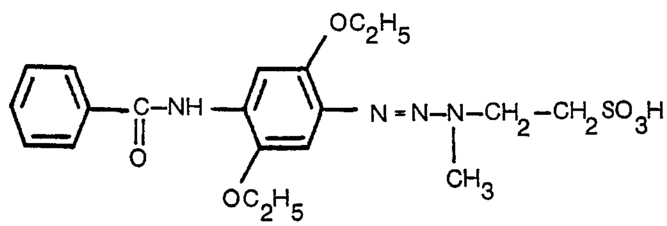

so erhält man Druckansatzt, mit denen sich auf Baumwolle farbstarke Brauntöne erzielen lassen.

Beispiel 6

Druckansatzt

| | | |
|---|---|---|
| 40 | g | 1-Amino-3-imino-isoindolenin |
| 12 | g | Nickelkomplex von Ethylsarkosin |
| 12 | g | Variante A |
| 100 | g | Thiodiglykol |
| 8 | g | Natronlauge, 38° Be |
| 550 | g | Verdickung |
| 35 | g | Diethylaminoethanol-lactat |
| X | g | Wasser* |
| 5—25 | g | Diazoaminoverbindung |

* Die zugesetzte Wassermenge ist so zu bemessen, daß für den Druckansatz eine Gesamtmasse von 1000 g resultiert

geben in bekannter Weise durch Drucken, Trocknen, Fixieren und Waschen olivgrüne bis schwarze Färbungen auf Baumwolle, wenn als Variante A 1,2-Diaminobenzol m-Phenylendiamin oder 2-Chlor-1,3-diaminobenzol und als Diazoaminoverbindung

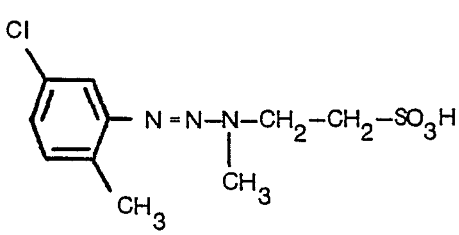

oder

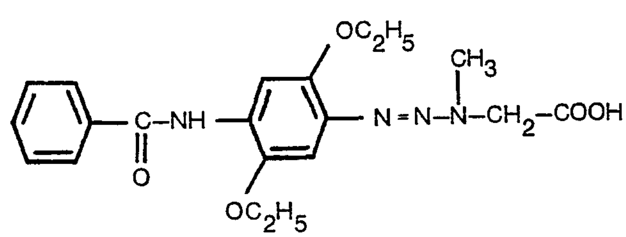

eingesetzt werden.

Beispiel 7

Druckansatz

| | | |
|---|---|---|
| 40 | g | 1-Amino-3-imino-isoindolenin |
| 10—30 | g | Variante I |
| 15—25 | g | Diazoaminoverbindung |
| 100 | g | Thiodiglykol |
| 10 | g | 25 %ige Ammoniaklösung |
| X | g | Wasser* |
| 500 | g | Stärkeether-Alginat-Verdickung |
| 30—40 | g | Diethylaminoethanol-lactat |

* Die Wassermenge ist so zu bemessen, daß für den Druckansatz eine Gesamtmasse von 1000 g resultiert.

Obiger Druckansatz wird auf ein Baumwoll- oder Regeneratcellulosegewebe aufgeklotzt, bei 80°C getrocknet und 5 Minuten bei 100°C gedämpft. Der Druck wird in üblicher Weise durch Waschen und Spülen fertiggestellt.

Als Variante I können eingesetzt werden:

1,3-Diaminobenzol

Phenylguanazol

2-Chlor-1,4-diaminobenzol.

Als Diazoaminoverbindungen können in obigen Druckansatz eingesetzt werden

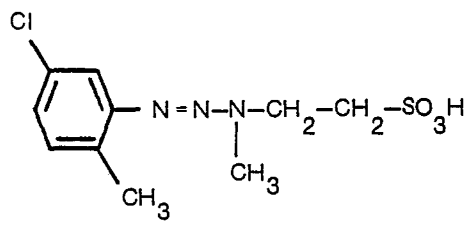

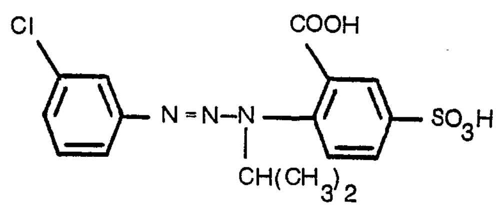

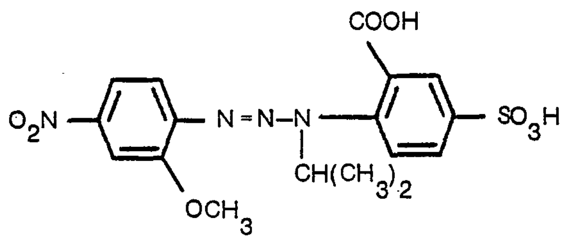

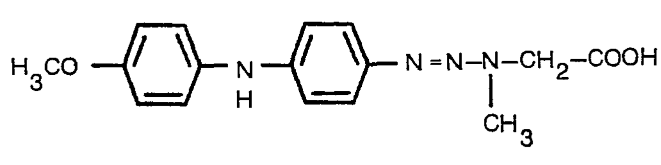

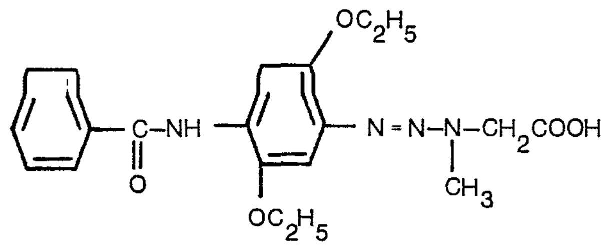

Die genannten Druckansätze liefern goldgelbe bis orange Farbtöne.

**Patentansprüche**

1. Farbstoffe, dadurch erhältlich, daß man ein Gemisch aus

A) einer Verbindung, die in einer ihrer tautomeren Strukturen der Formel

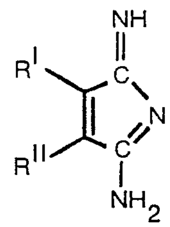

(I)

entspricht, in der

$R^I$, $R^{II}$=Alkyl, Phenyl, Wasserstoff oder zusammen Reste der Formeln

$S-CH_2-CH_2-S$,

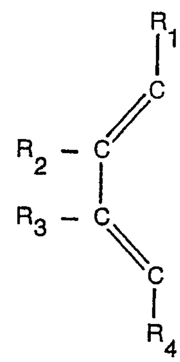

oder $CH_2—CH_2—CH_2—CH_2$, wobei

$R_1$, $R_2$, $R_3$, $R_4$ Phenyl, Alkoxy, Halogen, Phenoxy, Alkyl und Wasserstoff bezeichnen,

B) mindestens einer Verbindung, die einer der folgenden Stoffklassen a) und/oder b) angehört:

a) eine Verbindung der Formel

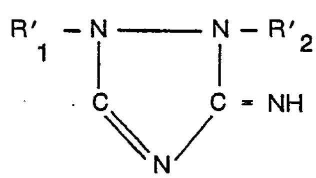

(III)

in der

$R'_1$, $R'_2$, für Wasserstoff, Acyl-, Alkyl-, oder Arylreste stehen,

b) eine Verbindung der Formel

$$[Ar]—(NH_2)_n \quad (IV)$$

wobei

Ar für einen gegebenenfalls substituierten Phenyl-, Biphenylyl-, Naphthyl-, Binaphthylyl- oder Anthrachinonyl- Rest steht und

n 2, 3 oder 4 bezeichnet, und

c) gegebenenfalls zusätzlich einem Hydroxynaphthoesäure-(2)-arylamid der Formel

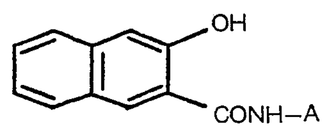

wobei A für einen gegebenenfalls durch $C_1$—$C_4$-Alkyl, $C_1$—$C_4$-Alkoxy, Nitro, Halogen substituierten Phenyl- oder Naphthylrest steht;

C) einer Diazoaminoverbindung; gegebenenfalls in Gegenwart eines Metalls oder einer Metallverbindung, die für die Herstellung von metallhaltigen Phthalocyaninen verwendet werden können, gegebenenfalls in Gegenwart eines Verdünnungsmittels unter Wärmebehandlung gegebenenfalls auf Fasermaterialien umsetzt.

2. Farbstoffe gemäß Anspruch 1, dadurch erhältlich, daß man, bezogen auf das Gesamtgewicht der Komponenten A, B und C 40—70 Gew.-% der Komponente A, 10—20 Gew.-% der Komponente B und 15—30 Gew.-% der Komponente C einsetzt.

3. Verfahren zum Färben und Bedrucken von Fasermaterialien, dadurch gekennzeichnet, daß man die Komponenten A, B und C gemäß den Ansprüchen 1 und 2 gegebenenfalls in Gegenwart eines Metalls oder einer Metallverbindung, die für die Herstellung von metallhaltigen Phthalocyaninen verwendet werden können, gegebenenfalls in Gegenwart eines Verdünnungsmittels unter Wärmebehandlung auf Fasermaterialien kondensiert.

## Claims

1. Dyestuffs which are obtainable by reacting a mixture of

A) a compound which, in one of its tautomeric structures, corresponds to the formula

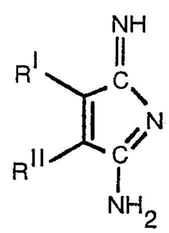

(I)

in which

$R^I$ and $R^{II}$ = alkyl, phenyl or hydrogen, or together represents radicals of the formulae

$S-CH_2-CH_2-S$, 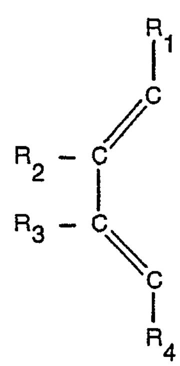

or $CH_2$—$CH_2$—$CH_2$—$CH_2$, wherein

$R_1$, $R_2$, $R_3$ and $R_4$ designates phenyl, alkoxy, halogen, phenoxy, alkyl and hydrogen,

B) at least one compound which belongs to one of the following classes of substances a) and/or b):

a) a compound of the formula

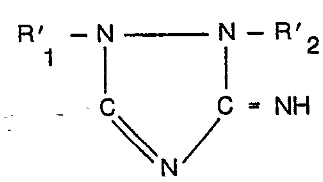

(III)

in which

$R'_1$ and $R'_2$ represent hydrogen, acyl, alkyl or aryl radicals,

b) a compound of the formula

$$[Ar]-(NH_2)_n \qquad (IV)$$

wherein

Ar represents an optionally substituted phenyl, biphenylyl, naphthyl, binaphthylyl or anthraquinonyl radical and n designates 2, 3 or 4, and

c) optionally, in addition, a hydroxy-2-naphthoic acid arylamide of the formula

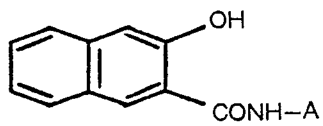

wherein

A represents a phenyl or naphthyl radical which is optionally substituted by $C_1$—$C_4$-alkyl, $C_1$—$C_4$-alkoxy, nitro or halogen; and

C) a diazoamino compound; if appropriate in the presence of a metal or metal compound, which can be used for the preparation of metal-containing phthalocyanines, if appropriate in the presence of a diluent, under the influence of heat and if appropriate on fibre materials.

2. Dyestuffs according to Claim 1, which are obtainable by employing, relative to the total weight of components A, B and C, 40—70% by weight of component A, 10—20% by weight of component B and 15—30% by weight of component C.

3. Process for dyeing and printing fibre materials, characterised in that components A, B and C according to Claims 1 and 2 are subjected to a condensation reaction on fibre materials, if appropriate in the presence of a metal or metal compound, which can be used for the preparation of metal-containing phthalocyanines, if appropriate in the presence of a diluent, and under the influence of heat.

**Revendications**

1. Colorants qu'on peut obtenir en faisant réagir un mélange de:

A) un composé qui, dans l'une de ses formes tautomères, répond à la formule

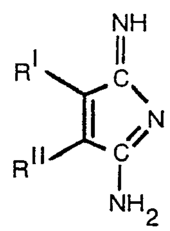

(I)

dans laquelle

$R^I$, $R^{II}$ = alkyle, phényle, hydrogène ou bien, ensemble, des restes de formules

$S-CH_2-CH_2-S$, 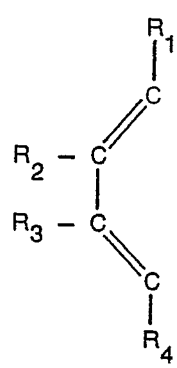

ou $CH_2$—$CH_2$—$CH_2$—$CH_2$, dans lesquels

$R_1$, $R_2$, $R_3$, $R_4$ représentent des groupes phényle, alcoxy, des halogènes, des groupes phénoxy, alkyle et l'hydrogène,

B) Au moins un composé appartenant à l'une des classes des substances a) et et/ou b) suivantes:

a) un composé de formule

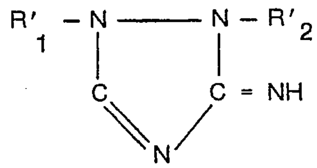

(III)

dans laquelle

$R'_1$, $R'_2$ représentent l'hydrogène, des groupes acyle, alkyle ou aryle,

b) un composé de formule

$$[Ar]—(NH_2)_n \quad (IV)$$

dans laquelle

Ar représente un reste phényle, biphényle, naphtyle, binaphtylyle ou anthraquinonyle éventuellement substitué, et

n est égal à 2, 3 ou 4, et

c) éventuellement en plus un arylamide d'acide hydroxynaphtoïque-(2) de formule

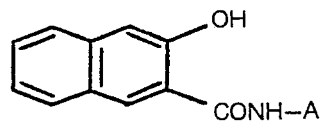

dans laquelle A représente un reste phényle ou naphtyle éventuellement substitué par des groupes alkyle en $C_1—C_4$, alcoxy en $C_1—C_4$, nitro, des halogènes;

C) Un composé diazoaminé; éventuellement en présence d'un métal ou d'un composé métallique utilisable pour la préparation de phtalocyanines métalliques, éventuellement en présence d'un diluant, en traitant à chaud, et éventuellement sur des matières fibreuses.

2. Colorant selon la revendication 1, qu'on peut obtenir en utilisant, par rapport au poids total des composants A), B) et C), de 40 à 70% en poids du composant A), de 10 à 20% en poids du composant B) et de 15 à 30% en poids du composant C).

3. Procédé pour la teinture et l'impression de matières fibreuses, caractérisé en ce que l'on condense les composants A), B) et C) selon les revendications 1 et 2 sur les matières fibreuses en présence d'un métal ou d'un composé métallique utilisable pour la préparation de phtalocyanines métalliques, éventuellement en présence d'un diluant et en traitant à chaud.